# EUROPEAN PATENT APPLICATION

(11) **EP 1 662 790 A1**
(43) Date of publication of application: **31.05.2006**
(21) Application number: 04716013.0
(22) Date of filing: 01.03.2004
(51) Int. Cl.: H04N 7/173

(54) **RECEPTION DEVICE**

(71) Applicant: MITSUBISHI DENKI K.K., Tokyo 100-8310 (JP)
(72) Inventor: MIURA, Shin, Mitsubishi Denki Kabushiki Kaisha, Chiyoda-ku, Tokyo 100-8310 (JP); MATSUBARA, Masami, Mitsubishi Denki K.K., Chiyoda-ku, Tokyo 100-8310 (JP); AKATSU, Shinji, Mitsubishi Denki Kabushiki Kaisha, Chiyoda-ku, Tokyo 100-8310 (JP); IMAI, Shigeru, Mitsubishi Denki Kabushiki Kaisha, Chiyoda-ku, Tokyo 100-8310 (JP)
(74) Representative: Gleiter, Hermann
(86) International application number: PCT/JP2004/002487
(87) International publication number: WO 2005/084023

(57) **Abstract**

A receiving apparatus includes: a content identifier conversion table for holding channel numbers designated via an input device, and information about content identifiers corresponding to the channel numbers; a channel selection control section for converting a designated channel number to a corresponding content identifier with reference to the content identifier conversion table; and a display control section for receiving the content identifier passing through the conversion, for instructing, when the content identifier is a channel of the television broadcasting, the television broadcasting receiving section to receive a program of the channel, for instructing, when the content identifier is an identifier of contents on the communication network, the content acquiring section to acquire the contents, and for supplying to an output device the acquired television program or the contents on the communication network.

## Description

### TECHNICAL FIELD

The present invention relates to a receiving apparatus for receiving contents of television broadcasting or on networks.

### BACKGROUND ART

Televisions such as Internet televisions, which have a function of acquiring contents other than television broadcasting and display them, have become widely available. When accessing Web contents on the Internet, users of such televisions must access desired contents by manipulating a user interface completely different from that of ordinary televisions.

As one of common methods, there is a method in which the user starts a Web browser using a menu screen or remote control buttons of the television, and then accesses desired contents by inputting a URL (Uniform Resource Locator) with a keyboard or the like.

The input of the URL by this method offers a problem in that the operation is not easy for a user unaccustomed to the Web browsing by a personal computer.

To solve such a problem, Japanese patent application laid-open No. 2003-208369, for example, proposes a method for a user to access desired contents by selecting a URL from a URL set registered in advance using a dedicated menu rather than directly inputting the URL.

The method disclosed in the patent document eliminates users having to input the URL directly with the keyboard or the like. However, the method is not a friendly interface to all the users because it employs the dedicated menu completely different from that of the television which allows the users to directly select a channel with a remote control. In addition, the method has a problem in that the access is limited to the URLs registered in advance.

The present invention is implemented to solve the foregoing problems. Therefore it is an object of the present invention to provide a receiving apparatus capable of viewing other contents through the same manipulation as that of viewing ordinary televisions.

### DISCLOSURE OF THE INVENTION

According to the present invention, there is provided a receiving apparatus for receiving television broadcasting, and for acquiring contents on a communication network by being connected to a communication network via a communication interface, the receiving apparatus including: a content identifier conversion table for holding channel numbers designated via an input device, and information about content identifiers corresponding to the channel numbers; a channel selection control section for converting a designated channel number to a corresponding content identifier with reference to the content identifier conversion table; and a display control section for receiving the content identifier passing through the conversion, for instructing, when the content identifier is a channel of the television broadcasting, the television broadcasting receiving section to receive a program of the channel, for instructing, when the content identifier is an identifier of contents on the communication network, the content acquiring section to acquire the contents, and for supplying to an output device the acquired television program or the contents on the communication network.

Thus, it offers an advantage of being able to provide a receiving apparatus capable of viewing contents other than television through the same manipulation as that for viewing television.

### BRIEF DESCRIPTION OF THE DRAWINGS

FIG. 1 is a block diagram showing a configuration of a broadcast receiver of an embodiment 1 in accordance with the present invention, and a configuration of a system using the broadcast receiver;
FIG. 2 is a diagram showing a content identifier conversion table of the embodiment 1 in accordance with the present invention;
FIG. 3 is a block diagram showing an internal configuration of a content identifier registering section of the embodiment 1 in accordance with the present invention, and its relationships with a related processing section;
FIG. 4 is a diagram showing a content identifier setting menu screen of the embodiment 1 in accordance with the present invention;
FIG. 5 is a diagram showing a content identifier input menu screen of the embodiment 1 in accordance with the present invention;
FIG. 6 is a block diagram showing an internal configuration of a content identifier registering section of an embodiment 2 in accordance with the present invention, and its relationships with a related processing section;
FIG. 7 is a diagram showing a content identifier setting mail of an embodiment 2 in accordance with the present invention;
FIG. 8 is a block diagram showing a configuration of a broadcast receiver of an embodiment 3 in accordance with the present invention, and a configuration of a system using the broadcast receiver; and
FIG. 9 is a diagram showing a content identifier conversion table of the embodiment 3 in accordance with the present invention.

### BEST MODE FOR CARRYING OUT THE INVENTION

The best mode for carrying out the invention will now be described with reference to the accompanying drawings to explain the present invention in more detail.

### EMBODIMENT 1

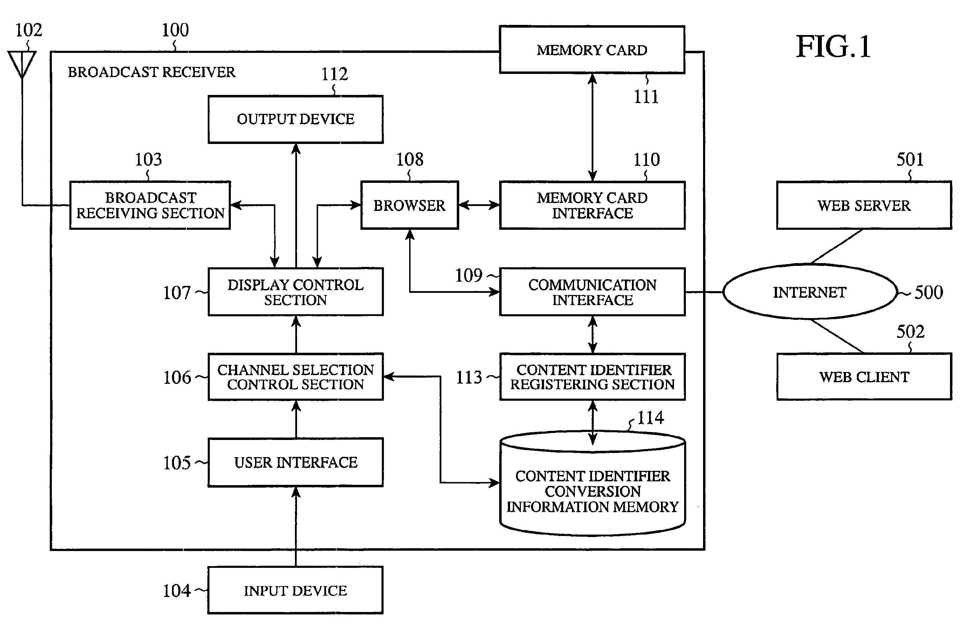

FIG. 1 is a block diagram showing a configuration of a broadcast receiver (receiving apparatus) 100 of an embodiment 1 in accordance with the present invention, and a configuration of a system using the broadcast receiver 100.

As shown in FIG. 1, the broadcast receiver 100 has a broadcast wave receiving antenna 102, a broadcast receiving section 103, an input device 104, a user interface 105, a channel selection control section 106, a display control section 107, a browser (content acquiring section) 108, a communication interface 109, a memory card interface 110, a memory card 111, an output device 112, a content identifier registering section 113, and a content identifier conversion information memory 114.

As for the broadcast receiving section 103, user interface 105, channel selection control section 106, display control section 107, browser 108, communication interface 109, memory card interface 110, and content identifier registering section 113, they constitute a part of the processor of the broadcast receiver 100, and are divided rather expediently in accordance with program modules for operating the processor.

The input device 104 consists of input devices such as a remote control and a keyboard.

The memory card 111 consists of a memory card such as a removable flash memory card.

The output device 112 includes a display unit and a sound output device such as a speaker.

The content identifier conversion information memory 114 consists of a storing unit such as a memory or hard disk of the broadcast receiver 100. Alternatively, it may be an external storing unit connected to the broadcast receiver 100 via a communication line.

The broadcast receiver 100 is connected to a Web server 501 and a Web client 502 like a personal computer via the Internet 500.

Next, the operation will be described.

First, the operation for viewing ordinary television broadcasting will be described.

When the user inputs a channel number through the input device 104, the user interface 105 is supplied with a channel designation signal, and notifies the channel selection control section 106 of the information about the designated channel. Assume here that the user designates the channel 3 using the input device 104. Then, the user interface 105 notifies the channel selection control section 106 that the channel 3 is designated.

Referring to the content identifier conversion table stored in the content identifier conversion information memory 114, the channel selection control section 106 converts the notified channel information to the identifier of the corresponding contents.

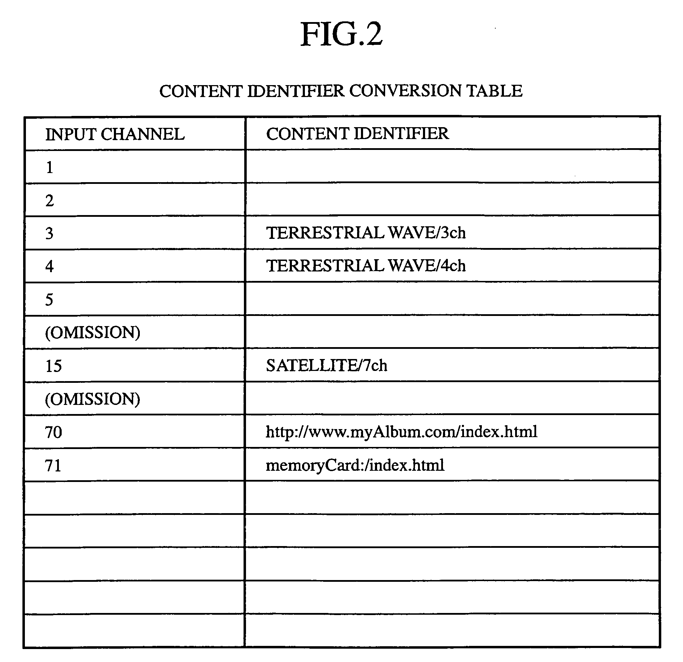

FIG. 2 is a diagram showing an example of the content identifier conversion table of the embodiment 1.

When the channel selection control section 106 is notified of the channel 3, the channel 3 is converted to the content identifier indicating the corresponding terrestrial/3ch, which means the terrestrial television channel 3. The content identifier after the conversion is delivered to the display control section 107.

The display control section 107 makes a decision as to a location and acquiring method of the target contents in response to the received content identifier. In this case, since the content identifier terrestrial/3ch is fed, the display control section 107 makes a decision that it should receive the channel 3 of the terrestrial television broadcasting, and instructs the broadcast receiving section 103 to receive the terrestrial channel 3.

In response to the instruction of the display control section 107, the broadcast receiving section 103 receives the television program of the terrestrial channel 3, and supplies the display control section 107 with the received program after decoding it into a format displayable by the output device 112.

Thus, the display control section 107 sends to the output device 112 the contents of the television program of the terrestrial channel 3 received via the broadcast receiving section 103, that is, the video and audio data.

The output device 112 supplies the display and speaker with the received video and audio data, respectively. Thus, the user can view the television program of the terrestrial channel 3.

Next, the operation for viewing the contents on the Internet will be described.

The operation will be described by way of example in which the user designates the channel 70 in the same manipulation as he or she performs using the input device 104 when viewing the television. The user interface 105 notifies the channel selection control section 106 that the channel 70 is designated.

Referring the content identifier conversion table as shown in FIG. 2, the channel selection control section 106 converts the notified channel 70 to the corresponding content identifier (URL) "http://www.myAlbum.com/index.html", and delivers it to the display control section 107.

In response to the received content identifier, the display control section 107 makes a decision as to the location and acquiring method of the target contents. In this case, since the URL http://www.myAlbum.com/index.html is fed, the display control section 107 instructs the browser 108 to acquire the contents of the Web page indicated by the URL.

The browser 108 is a browser for reading the Web contents on the Internet or the contents on a domestic network or on the memory card 111.

The browser 108 acquires the IP address of the Web server represented by "www.myAlbum.com" from the description of the notified URL. The acquisition of the IP address is carried out using the DNS (Domain Name System) on the Internet 500, for example.

Here, assume that the Web server is a Web server 501. Acquiring the IP address of the Web server 501, the browser 108 accesses the Web server 501 via the communication interface 109, and acquires the file index.html by the http protocol.

The browser 108 converts the acquired file index.html to a format displayable by the output device 112, and supplies it to the display control section 107.

The display control section 107 sends the data received from the browser 108 to the output device 112. The output device 112 supplies the received video and audio data to the display and speaker, respectively.

In this way, the user can view the Web page by the same manipulation as that when viewing a television program.

Although the foregoing description is made by way of example in which the Web server 501 is connected to the Internet 500, the Web server 501 may be included in the broadcast receiver 100 itself, or may be present on a domestic network or intranet.

Next, the operation for viewing a file stored in the memory card 111 installed in the broadcast receiver 100 will be described.

The description will be made by way of example in which the user selects a channel 71 with the input device 104 through the same manipulation as that for viewing the television. The user interface 105 notifies the channel selection control section 106 that the channel 71 is designated.

Referring the content identifier conversion table shown in FIG. 2, the channel selection control section 106 converts the notified channel 71 to the corresponding content identifier "memoryCard:/index.html", and sends it to the display control section 107.

In response to the received content identifier, the display control section 107 makes a decision as to the location and acquiring method of the target contents. In this case, the display control section 107 instructs the browser 108 to acquire the contents indicated by the content identifier memoryCard:/index.html.

The browser 108 recognizes from the notified content identifier that the file is stored in the memory card 111, and accesses the memory card 111 via the memory card interface 110 to acquire the file "index.html".

The browser 108 converts the acquired file index.html to a format displayable by the output device 112, and supplies it to the display control section 107.

The display control section 107 transmits the data received from the browser 108 to the output device 112. The output device 112 supplies the received video and audio data to the display and speaker, respectively.

In this way, the user can view the file stored in the memory card 111 through the same manipulation as that when viewing a television program.

Next, the operation for storing a new content identifier in the content identifier conversion table will be described.

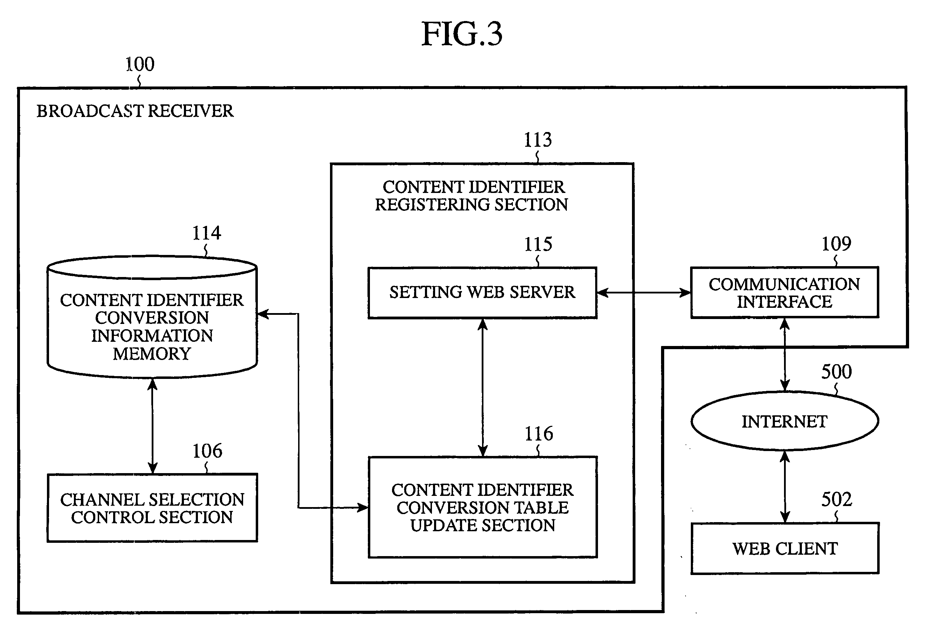

FIG. 3 is a block diagram showing an internal configuration of the content identifier registering section 113, and its relationships with a related processing section. Here, part of the processing section, which does not have direct relation with the content identifier registering section 113, is omitted.

As shown in FIG. 3, the content identifier registering section 113 includes a setting Web server (Web server) 115, and a content identifier conversion table update section 116. The setting Web server 115 is a server for carrying out communication with the external Web client 502. The content identifier conversion table update section 116 operates according to a CGI (Common Gateway Interface) program for carrying out data input from and output to the content identifier conversion information memory 114 in response to a requirement from the external Web client 502.

Next, the operation when the user registers a new content identifier will be described.

The description will be made by way of example in which the user performs the registration using the Web client 502 connected to the Internet 500. The user accesses the setting Web server 115 from the Web client 502 via the communication interface 109.

The setting Web server 115 starts the content identifier conversion table update section 116, and acquires the setting information in the current content identifier conversion table from the content identifier conversion information memory 114 via the content identifier conversion table update section 116. The setting Web server 115 sends the acquired setting information to the Web client 502 via the communication interface 109. On the screen of the Web client 502, a content identifier setting menu is displayed.

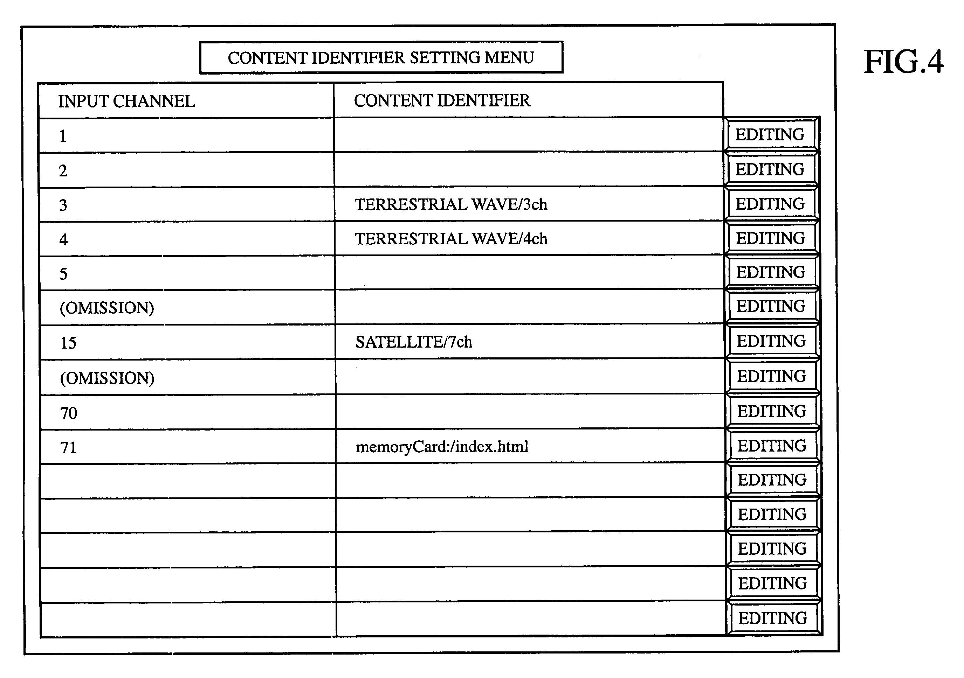

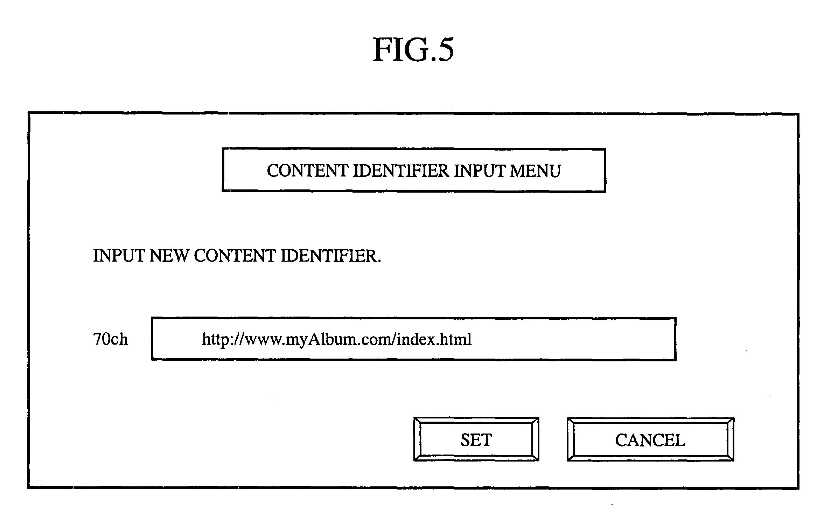

FIG. 4 is a diagram showing an example of the content identifier setting menu of the embodiment 1. Referring to the menu, the user confirms the current setting, and clicks an editing button of a channel he or she wishes to set or change anew. When the editing button is clicked, a content identifier input menu appears. Assume here that the user clicks the editing button of the channel 70 on the content identifier setting menu, in which case the content identifier input menu as shown in FIG. 5 is displayed.

The user enters a content identifier to be registered to the channel 70. Here, "http://www.myAlbum.com/index.html" is input. After the input, the user clicks the setting button. Thus, the setting information is transmitted from the Web client 502 to the setting Web server 115 so that the input "http://www.myAlbum.com/index.html" is registered as the content identifier of the channel 70.

Receiving the setting information on the content identifier from the Web client 502, the setting Web server 115 starts the content identifier conversion table update section 116, and supplies it with the received content identifier setting information. According to the content identifier setting information supplied, the content identifier conversion table update section 116 updates the content identifier conversion table.

In this way, the user can view the desired contents through the same manipulation as that for viewing the television by registering any desired television broadcasting channels or Web contents on the Internet.

As described above, the embodiment 1 is configured such that the channel selection control section 106, referring to the content identifier conversion table, acquires the content identifier corresponding to the channel the user inputs, and instructs the broadcast receiving section 103 or browser 108 to acquire the desired contents according to the content identifier. Accordingly, the embodiment 1 enables the user to view contents other than the television through the same manipulation as that for viewing the television.

In addition, the embodiment 1 is configured such that the content identifier registering section 113 updates the setting of the content identifier conversion table in response to the content identifier setting requirement from the external Web client 502. Thus, the user can view any desired contents without being limited to the access to the television broadcasting channels or URLs, which are registered in advance.

### EMBODIMENT 2

The embodiment 2 is the same as the embodiment 1 in the configuration of the broadcast receiver, but differs from the embodiment 1 in the configuration of the content identifier setting section.

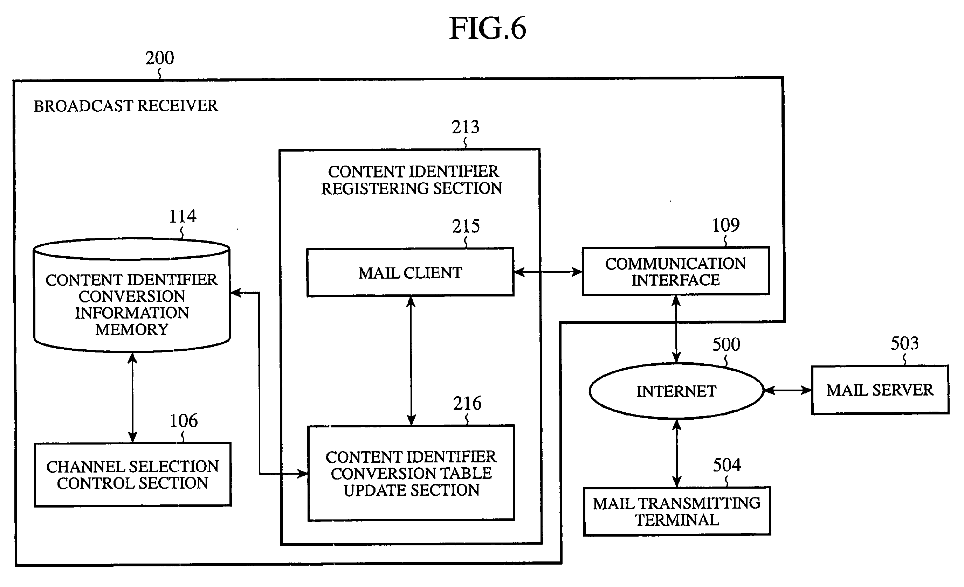

FIG. 6 is a block diagram showing an internal configuration of a content identifier registering section 213 in a broadcast receiver 200 of the embodiment 2, and its relationships with the processing section. In FIG. 6, the same reference numerals as those of FIG. 3 designate the same components. As shown in FIG. 6, the content identifier registering section 213 includes a mail client 215, and a content identifier conversion table update section 216. Although part of the processing section, which does not have direct relationships with the content identifier registering section 213, is omitted, the remaining configuration of the broadcast receiver 200 is the same as that of the broadcast receiver 100 of the embodiment 1.

The mail client 215 is a mail client for receiving a mail via a mail server 503 on the Internet 500.

Next, the operation when the user registers a new content identifier in the embodiment 2 will be described.

Here, the description will be made by way of example in which the user carries out the registration using a mail transmitting terminal 504 such as a computer or mobile phone, which is connected to the Internet 500, and has a mail transmitting function.

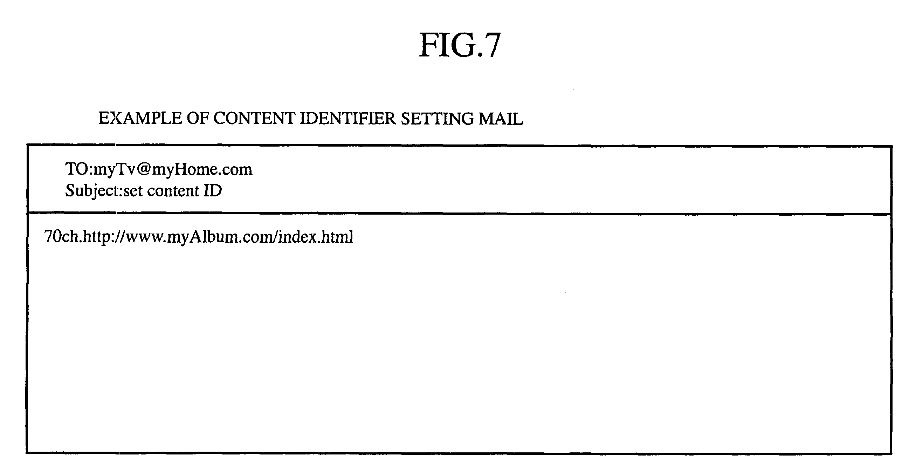

The user transmits a content identifier setting mail from the mail transmitting terminal 504 to the broadcast receiver 200 in a standard format. FIG. 7 shows an example of the content identifier setting mail of the embodiment 2. As shown in FIG. 7, at the address (TO:), the mail address (myTV@myHome.com) of the broadcast receiver 200 is set, and at the Subject: the phrase "set content ID" is set, which enables the broadcast receiver 200 to identify it as the content identifier setting mail.

In the example of FIG. 7, the content identifier setting information, which is described in the mail text, has a content instructing to register "http://www.myAlbum.com/index.html" to the channel 70.

The content identifier setting mail transmitted from the mail transmitting terminal 504 is stored in the mail server 503 until it is received by the mail client 215 of the broadcast receiver 200.

The mail client 215, accessing the mail server 503 regularly, receives new mails, and extracts the content identifier setting mail from the received mails. Here, the mail having "set content ID" in the Subject is extracted, and is delivered to the content identifier conversion table update section 216.

The content identifier conversion table update section 216 analyzes the text of the content identifier setting mail delivered from the mail client 215, and rewrites the contents of the content identifier conversion table in accordance with the description contents.

In the case of the mail as shown in FIG. 7, "http://www.myAlbum.com/index.html" is registered to the content identifier of the channel 70.

As described above, the embodiment 2 is configured such that the content identifier registering section 213 updates the setting of the content identifier conversion table in response to the content identifier setting mail transmitted from the external mail transmitting terminal 504. Thus, the user can view any desired contents without being limited to the access to the television broadcasting channels or URLs, which are registered in advance.

### EMBODIMENT 3

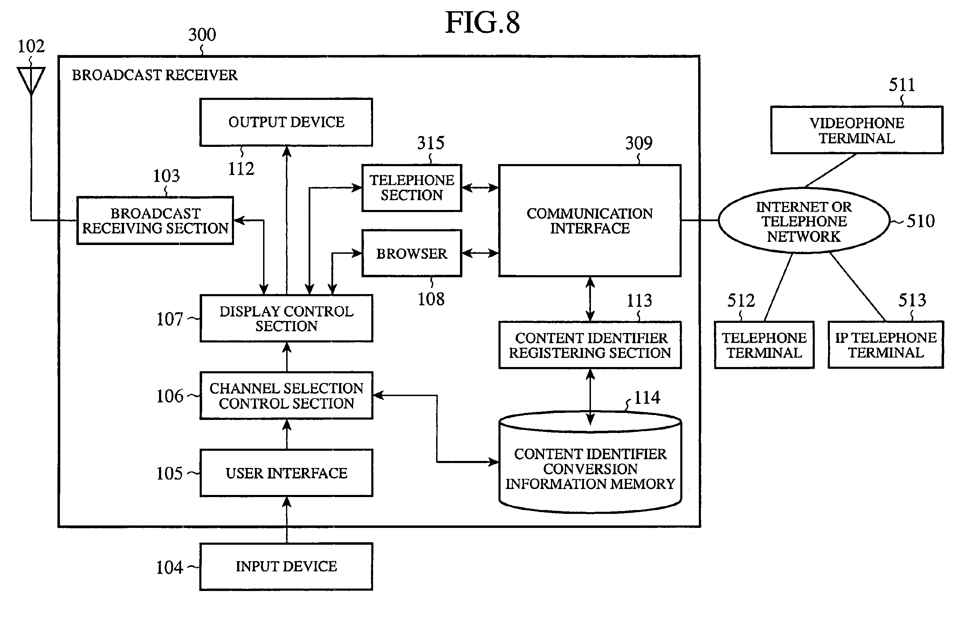

FIG. 8 is a block diagram showing a configuration of a broadcast receiver 300 of an embodiment 3 in accordance with the present invention, and a configuration of a system using the broadcast receiver 300. In FIG. 8, the same reference numerals as those of FIG. 1 designate the same components.

As shown in FIG. 8, the broadcast receiver 300 has a telephone section 315.

The telephone section 315 has a function of an IP telephone or a videophone.

The broadcast receiver 300 is connected to a videophone terminal 511, telephone terminal 512, and IP telephone terminal 513 via the Internet 510.

The videophone terminal 511, telephone terminal 512, and IP telephone terminal 513 communicate with the broadcast receiver 300 via the telephone section 315. The Internet 510 can be replaced by a telephone network.

Next, the operation when the telephone function of the broadcast receiver 300 of the embodiment 3 is used will be described.

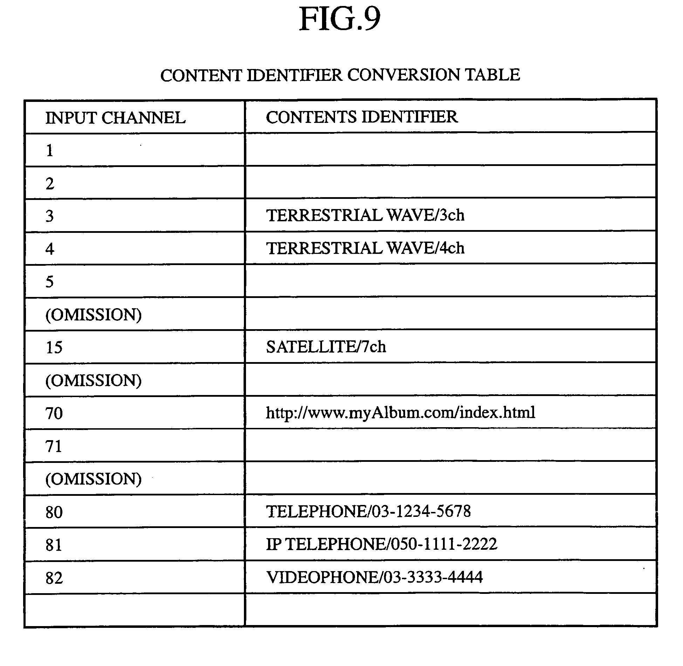

FIG. 9 is a diagram showing an example of the content identifier conversion table of the embodiment 3.

The description will be made by way of example in which the user designates the channel 80 using the input device 104. The user interface 105 notifies the channel selection control section 106 that the channel 80 is designated.

Referring to the content identifier conversion table as shown in FIG. 9, the channel selection control section 106 converts the notified channel 80 to the corresponding content identifier (telephone number) "telephone/03-1234-5678", and delivers it to the display control section 107.

The display control section 107 makes a decision as to the acquiring method of the contents from the received content identifier "telephone/03-1234-5678", and instructs the telephone section 315 to call the party with that telephone number.

The telephone section 315 calls the party via the communication interface 309. Assume that the party is the telephone terminal 512. When the connection with the telephone terminal 512 has been completed, the user talks with the party using a microphone in the telephone section 315 and a speaker for outputting the television sound of the broadcast receiver 300.

Likewise, when the user designates the channel 81 with the input device 104, the channel selection control section 106 converts it to the content identifier "IP telephone/050-1111-2222", and delivers it to the display control section 107.

The display control section 107 instructs the telephone section 315 to connect to the party IP telephone (that is, the IP telephone terminal 513). The telephone section 315 connects to the IP telephone terminal 513 via the Internet 510. Thus, the user can talk with the IP telephone terminal 513.

Likewise, when the user designates the channel 82 with the input device 104, the channel selection control section 106 converts it to the content identifier "videophone/03-3333-4444", and delivers it to the display control section 107.

The display control section 107 instructs the telephone section 315 to connect to the party videophone (that is, the videophone terminal 511). The telephone section 315 connects to the videophone terminal 511, and the user, using the camera and microphone installed in the telephone section 315 as the input device, and using the screen and speaker employed for viewing the ordinary television as the output device, can make a videophone conversation with the videophone terminal 511.

As described above, the embodiment 3 includes the telephone section 315. Thus, registering the external telephone terminal, IP telephone terminal and videophone terminal to the content identifier conversion table makes it possible for the user to make a telephone conversation with these telephone terminals through the same manipulation as that for viewing the television.

In addition, as the embodiment 1, the embodiment 3 can also enable the content identifier registering section 113 to update the setting of the content identifier conversion table in response to a content identifier setting request from the external Web client. Alternatively, as the embodiment 2, the embodiment 3 can provide the content identifier registering section 113 with the mail client function, so that the embodiment 3 can update the setting of the content identifier conversion table in response to the content identifier setting mail transmitted from the external mail transmitting terminal.

### INDUSTRIAL APPLICABILITY

As described above, the receiving apparatus in accordance with the present invention is suitable for enabling viewing the contents other than the television contents through the same manipulation as that for viewing the television.

## Claims

1. A receiving apparatus having a television broadcasting receiving section for receiving television broadcasting, and a content acquiring section connected to a communication network via a communication interface for acquiring contents on the communication network, said receiving apparatus comprising:
a content identifier conversion table for holding channel numbers designated via an input device, and information about content identifiers corresponding to the channel numbers;
a channel selection control section for converting a designated channel number to a corresponding content identifier with reference to said content identifier conversion table; and
a display control section for receiving the content identifier passing through the conversion, for instructing, when the content identifier is a channel of the television broadcasting, said television broadcasting receiving section to receive a program of the channel, for instructing, when the content identifier is an identifier of contents on the communication network, said content acquiring section to acquire the contents, and for supplying to an output device the acquired television program or the contents on the communication network.

2. The receiving apparatus according to claim 1, comprising a browser as the content acquiring section, wherein
the display control section instructs the browser, when the content identifier is a URL, to acquire the contents in accordance with the URL.

3. The receiving apparatus according to claim 1, comprising a telephone section having a telephone function, wherein
the display control section comprises, when the content identifier is a telephone number, a telephone section for instructing said telephone section having a telephone function to connect to a party designated by the telephone number.

4. The receiving apparatus according to claim 1, further comprising a content identifier registering section for updating contents of the content identifier conversion table in response to an input content identifier setting request.

5. The receiving apparatus according to claim 4, wherein said content identifier registering section comprises a Web server for receiving a content identifier setting request transmitted from a Web client, and updates the contents of the content identifier conversion table in response to the content identifier setting request.

6. The receiving apparatus according to claim 4, wherein the content identifier registering section comprises an electronic mail client for receiving an electronic mail describing a content identifier setting request, and updates the contents of the content identifier conversion table in response to the content identifier setting request.
